# FASCICULE DE BREVET EUROPEEN

(11) **EP 0 460 486 B1**
(45) Date de publication et mention de la délivrance du brevet: **29.03.1995**
(21) Numéro de dépôt: 91108557.9
(22) Date de dépôt: 27.05.1991
(51) Int. Cl.: H04Q 7/34

(54) **Procédé de maintenance centralisée, pour un réseau de téléphonie sans fil**
Verfahren zur zentralen Wartung für ein schnurloses Telefonnetzwerk
Method of centralized maintainance for a cordless telephone network

(30) Priorité: 30.05.1990 FR 9006706
(43) Date de publication de la demande: 11.12.1991
(73) Titulaire: ALCATEL CIT, 75008 Paris (FR)
(72) Inventeur: Bouix, Alain, F-91160 Longjumeau (FR); Hilbert, Claude, F-92130 Issy les Moulineaux (FR)
(74) Mandataire: Weinmiller, Jürgen

(56) Documents cités:
- COMMUTATION ET TRANSMISSION. no. 2, 1989, PARIS FR pages 5 - 22; J.DUNOGUE ETAL: 'DU CONCEPT A L'APPLICATION DU RESEAU INTELLIGENT Architecture etéquipements d'Alcatel '
- 8TH EUROPEAN CONFERENCE ON ELECTROTECHNICS Juin 1989, STOCKHOLM (SE) pages 470- 473; S. HANSEN ET AL: 'THE GSM BASE STATION SYSTEM AND THE RELATED EQUIPMENT
- INTERNATIONAL SWITCHING SYMPOSIUM vol. 6, 1990, STOCKHOLM (SE) pages 195-198; R.W. HENN et al.: " AT&T GENERATION DIGITAL CELLULAR BASE STATION TECHNOLOGY "
- INTERNATIONAL SWITCHING SYMPOSIUM vol. 1, Mars 1987, PHOENIX (US) pages 166 -171; M.M. KAPLAN ET AL: 'DESIGN AND IMPLEMENTATION OF INTEGRATED OPERATIONS SUPPORT '
- ELECTRICAL COMMUNICATION vol. 63, no. 4, 1989, BRUSSELS (BE) pages 356 - 365; M. BEYLTJENS: 'Telecommunications Management Networks '

## Description

L'invention concerne un procédé de maintenance centralisée, pour un réseau de téléphonie sans fil, ce réseau comportant notamment: des stations fixes; un réseau public commuté, numérique, à intégration de services, chaque station fixe lui étant reliée par des canaux téléphoniques; et des téléphones mobiles, sans fil, reliés par radio aux stations fixes. L'invention concerne plus particulièrement un service de téléphonie sans fil assuré par un réseau dit intelligent qui sera décrit plus loin. Un tel procédé est par exemple décrit dans l'article de J.Dunogue et al: "Du concept à l'application du réseau intelligent. Architecture et équipements d'Alcatel", COMMUTATION ET TRANSMISSION, no. 2, 1989, PARIS FR, pages 5-22.

La maintenance des stations fixes nécessite notamment de transmettre un message d'alarme d'une station fixe à un centre de maintenance, chaque fois qu'un incident se produit dans cette station fixe et nécessite de réaliser périodiquement, dans chaque station fixe, une procédure d'auto-test, et de transmettre les résultats de ce test, vers le centre de maintenance.

Un procédé connu de maintenance des stations fixes consiste à mémoriser dans chaque station fixe les incidents et les résultats des auto-tests, puis à les transmettre, pendant les heures de faible trafic, par l'un des canaux téléphoniques de la station fixe, vers un centre de maintenance. Un tel procédé ne permet qu'une exploitation différée des informations de maintenance transmises par les stations fixes. Classiquement, ces informations de maintenance sont transmises journellement. Le centre de maintenance ne peut pas avoir une vision globale exacte de l'état d'un parc de stations fixes, ce qui crée des contraintes et des limitations pour l'exploitation de ces informations de maintenance, notamment pour les délais de remise en état des stations fixes défectueuses. En outre, chaque centre ne possède les données que du seul parc de stations fixes qu'il a en charge.

Un premier but de l'invention est de proposer un procédé de maintenance permettant à l'exploitant d'un parc de stations fixes d'avoir une vision globale et en temps réel de l'état de son parc, en centralisant immédiatement des messages signalant les incidents; et permettant à cet exploitant de lancer, n'importe quand, une procédure d'auto-test dans une station fixe, et de recevoir immédiatement un message indiquant les résultats de ces auto-tests.

Un autre but de l'invention est de permettre à l'exploitant de modifier, par téléchargement, le logiciel de chaque station fixe, afin de permettre des améliorations des fonctions des stations fixes, ou bien permettre la mise hors service, totale ou partielle, d'une station fixe défectueuse. Le procédé doit alors permettre d'identifier la version du logiciel en service dans une station fixe.

Enfin, l'invention a pour but de permettre de centraliser vers un centre de maintenance les informations de maintenance de plusieurs parcs de stations fixes, exploités respectivement par plusieurs opérateurs, en permettant à différents exploitants régionaux de consulter les données concernant leurs parcs respectifs, au moyen de terminaux déportés.

Pour atteindre ces buts, le procédé selon l'invention doit être mis en oeuvre dans un réseau de téléphonie sans fil ayant une structure de réseau intelligent.

Selon l'invention, un procédé de maintenance centralisée,pour un réseau intelligent de téléphonie sans fil, la structure dudit réseau intelligent comportant :
- un réseau de distribution constitué par des stations fixes et des téléphones numériques sans fil, reliés par radio aux stations fixes;
- un réseau public commuté numérique, à intégration de services, chaque station fixe utilisant un canal de signalisation d'usager à usager ;
- des points de commande de service réseau reliés au réseau commuté et comportant chacun une base de données d'abonnés au service de téléphonie sans fil, et un dispositif logique de traitement d'appels;
- un point de commande de service gestion comportant une base de données de référence;

est caractérisé en ce qu'il consiste à :
- transmettre un message de maintenance, d'une station fixe à un point de commande de service réseau, par le canal de signalisation d'usager à usager, dans les cas où la station fixe détecte un incident;
- élaborer un ticket de maintenance, dans ledit point de commande de service réseau;
- transmettre ledit ticket de maintenance au point de commande de service gestion et le stocker dans sa base de données.

Le procédé ainsi caractérisé permet de disposer sans délais des informations de maintenance concernant les incidents détectés par les stations fixes, puisque ces informations sont transmises par le canal de signalisation d'usager à usager, parallèlement et indépendamment de la transmission des signaux téléphoniques, puis sont stockées en temps réel dans la base de données du point de commande de service gestion.

Selon une autre caractéristique, le procédé selon l'invention consiste en outre à :
- transmettre un ordre d'auto-test, du point de commande de service gestion, à une station fixe, via un point de commande de service réseau, desservant cette station fixe, par le canal de signalisation d'usager à usager;
- effectuer une procédure d'auto-test dans la station fixe recevant cet ordre;
- transmettre un message de maintenance, contenant les résultats du test, de cette station fixe audit point de commande de service réseau, par ledit canal de signalisation d'usager à usager;
- élaborer un ticket de maintenance, à partir du message de maintenance, dans ledit point de commande de service réseau; et le transmettre audit point de commande de service gestion;
- stocker le ticket de maintenance, dans la base de données du point de commande de service gestion.

Le procédé ainsi caractérisé permet de lancer périodiquement une procédure d'auto-test dans chacune des stations fixes successivement, avec une période paramètrable par l'exploitant des stations fixes. Il permet aussi de lancer cette procédure isolément dans une station fixe particulière, à n'importe quel moment souhaité par l'exploitant de la station fixe par exemple pour vérifier le bon fonctionnement d'une station fixe qui vient d'être réparée. Dans tous les cas, les résultats du test sont disponibles immédiatement dans la base de données du point de commande de service gestion.

Selon une autre caractéristique, applicable dans un réseau dont les stations fixes comportent un logiciel remplaçable au moins en partie, le procédé selon l'invention, pour modifier le logiciel d'une station fixe à l'initiative de l'exploitant de cette station, consiste en outre à : transmettre des informations du point de commande de service gestion, via le point de commande de service réseau desservant ladite station, par un canal téléphonique reliant cette station au réseau public commuté; et, pour permettre à l'exploitant de connaître l'état du logiciel d'une station, il consiste en outre à transmettre un mot identifiant la version du logiciel d'une station, dans chaque message de maintenance envoyé par ladite station vers le point de commande de service gestion.

Le procédé ainsi caractérisé permet de réaliser la maintenance du logiciel de chaque station; et il permet de contrôler quelle est la version du logiciel présente dans une station, au moment où celle-ci envoie un message de maintenance. Cette possibilité de modifier le logiciel d'une station fixe permet notamment de télécommander une mise hors service partielle, ou totale, d'une station fixe.

Selon une autre caractéristique, le procédé selon l'invention consiste en outre à :
- transmettre du point de commande de service gestion vers un terminal d'un centre régional de maintenance, des informations de maintenance concernant le parc de stations fixes d'une région, ces informations étant lues dans la base de données du point de commande de service gestion;
- transmettre du point de commande de service gestion à un terminal d'un centre national de maintenance, des informations de maintenance concernant le parc de stations fixes d'un ensemble de régions, ces informations étant lues dans la base de données du point de commande de service gestion.

Le procédé ainsi caractérisé permet à plusieurs exploitants distincts de gérer la maintenance de plusieurs parcs de stations fixes distincts correspondant par exemple à des régions distinctes, et permet à un centre national de gérer la maintenance de l'ensemble de tous les parcs de stations fixes.

L'invention sera mieux comprise et d'autres détails apparaîtront à l'aide de la description ci-dessous et des figures l'accompagnant :
- la figure 1 représente un exemple de réalisation de réseau de téléphonie sans fil, à structure de réseau intelligent, permettant la mise en oeuvre du procédé selon l'invention;
- la figure 2 représente un diagramme temporel illustrant la transmission d'un message de maintenance par une station fixe ayant détecté un incident;
- la figure 3 représente un diagramme temporel illustrant la transmission d'un ordre d'auto-test à une station fixe; et l'envoi, par cette station fixe, d'un message de maintenance contenant les résultats de ce test.

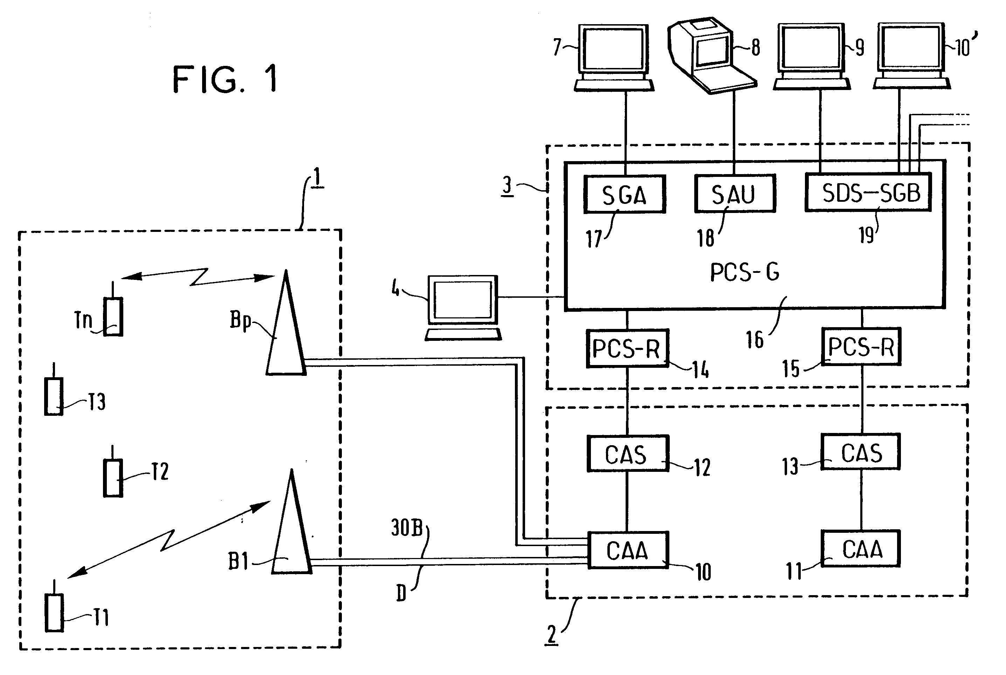

La figure 1 représente le schéma synoptique d'un exemple de réseau intelligent de téléphonie sans fil, permettant la mise en oeuvre du procédé selon l'invention. Il comporte : un réseau de distribution 1; un réseau public commuté 2, numérique, à intégration de services ; un réseau de points de commande de service, 3; et des unités d'exploitation 4, 7, 8, 9, 10′.

Le réseau de distribution 1 comprend des téléphones numériques de poche, sans fil, T1,...,Tn, et des stations fixes B1,...,Bp. Chaque téléphone peut être relié par radio à une station fixe située à proximité de ce téléphone, chaque station fixe pouvant desservir simultanément plusieurs téléphones, par exemple 40 téléphones. Dans cet exemple, chaque téléphone mobile est astreint à rester près d'une même station fixe pendant toute la durée d'une conversation, mais l'invention est applicable aussi à un réseau permettant le transfert d'une comunication d'une station fixe à une autre station fixe voisine, pour permettre un déplacement des téléphones mobiles en cours de la communication. Chaque station fixe B1,...,Bp est reliée par un câble au réseau public commuté 2. Chaque accès au réseau 2 est un accès normalisé qui comporte un canal de signalisation d'usager à usager, noté D, et plusieurs canaux téléphoniques. Le nombre de canaux téléphoniques peut être égal à 30 par exemple, et ils sont notés 30B. Ces canaux téléphoniques sont bidirectionnels et sont établis en mode circuit. Le canal de signalisation d'usager à usager est un canal bidirectionnel exploité en mode message. Il permet de transmettre des données parallèlement aux conversations téléphoniques. L'une de ses applications classiques consiste à transmettre le numéro de téléphone ou le nom du demandeur jusqu'à un afficheur situé sur le terminal téléphonique de la personne demandée.

Le réseau public commuté 2, est constitué de centres à autonomie d'acheminement (CAA) et de commutateurs d'accès au service (CAS). Cet exemple de réseau comporte deux centres à autonomie d'acheminement, 10 et 11, reliés respectivement à deux centres d'accès au service, 12 et 13, par des liaisons conformes au protocole n° 7 du CCITT. Dans cet exemple, les stations fixes B1,...,Bp sont reliées au centre à autonomie d'acheminement 10.

Le réseau 3 de points de commande de service comporte, dans cet exemple, deux points de commande de service réseau (PCS-R) 14 et 15; un point de commande de service gestion (PCS-G) 16. Les points de commande de service réseau 14 et 15 sont reliés respectivement aux centres d'accès au service, 12 et 13, par des liaisons conformes au protocole n°7 du CCITT; et sont reliés au point de commande de service gestion 16 par des liaisons conformes au protocole X25 du CCITT. Les unités d'exploitation 7, 8, 9, 10′ sont reliées au point de commande de service gestion 16 par des liaisons conformes au protocole X25 du CCITT, via un réseau de commutation de données, non représenté sur la figure.

Chaque unité d'exploitation 4, 7, 8, 9, 10′ est constituée essentiellement d'un terminal écran-clavier. Les terminaux sont affectés à différentes équipes d'exploitation, le point de commande de service gestion 16 fournissant à chaque équipe les informations et les moyens de dialogue. Le terminal 4 est affecté à l'exploitant technique du réseau intelligent. Chacun des terminaux 9, 10′ est affecté à un exploitant technique de l'ensemble des stations fixes ou d'un parc de stations fixes particulier. Chacun d'eux accède à la base de données du point de commande de service gestion 16, par un serveur de gestion de stations fixes (SGB) et par un serveur de statistiques (SDS), 19. Le terminal 8 est optionnel, c'est un terminal vidéotex, appelé communément minitel, permettant à un abonné de consulter des données de son service : données d'abonnement et tickets de facturation rapide. Il accède à la base de données du point de commande de service gestion 16 par un serveur d'accès d'usagers (SAU) 18. Le terminal 7 est affecté à un exploitant commercial du service de téléphonie sans fil. Il accède au point de commande de service gestion 16 par un serveur de gestion d'abonnés (SGA) 17.

Chaque station fixe B1,...,Bp comporte un contrôleur qui supervise des interfaces de raccordement : aux canaux téléphoniques 30B; au canal de signalisation D; et aux canaux radio. Le contrôleur assure les fonctions suivantes :
- initialisation d'un appel réseau lors de la prise d'un canal radio par un téléphone T1,...,Tn;
- participation à la procédure d'authentification d'un demandeur;
- analyse des informations reçues sur les canaux radio;
- supervision des canaux radio;
- réalisation d'une procédure d'auto-test interne pour la maintenance de la station fixe;
- réalisation de téléchargements pour modifier le logiciel de la station fixe;
- observations (comptages et statistiques);
- synchronisation des canaux radio;

Un appel d'un utilisateur du réseau public 2, pour un service, est analysé dans l'un des commutateurs d'accès au service 12 ou 13, puis est transmis au point de commande de service réseau, 14 ou 15, desservant ce commutateur. Ce point de commande de service réseau pilote alors l'ensemble du traitement d'appel et commande le commutateur d'accès au service pour toutes les actions nécessitant des ressources de commutation. Par exemple : pour l'envoi d'une annonce vocale, ou pour établir une connexion entre une entrée du réseau et une sortie du réseau, ou pour réaliser une temporisation. Pour traiter chaque appel, un point de commande de service réseau dispose d'un logiciel pour chaque service, organisé sous forme d'enchaînement d'actions élémentaires, en fonction de messages reçus. Il dispose en outre d'une base de données mise à jour en temps réel.

Le point de commande de service gestion 16 n'est pas concerné par le traitement d'appels. Par contre, il constitue une référence pour le service, car il comporte une base de données contenant les logiciels du service et contenant les données concernant les abonnés et les stations fixes. Il assure l'exploitation technique du réseau de points de commande de service réseau, 14 et 15, notamment en maintenant la cohérence des bases de données; et il assure l'exploitation commercial du service : gestion des contrats, accès de l'exploitant, accès des abonnés.

Les points de commande 14 à 16 peuvent être constitués par exemple d'un multiprocesseurs AlCATEL8300, commercialisé par la société ALCATEL.

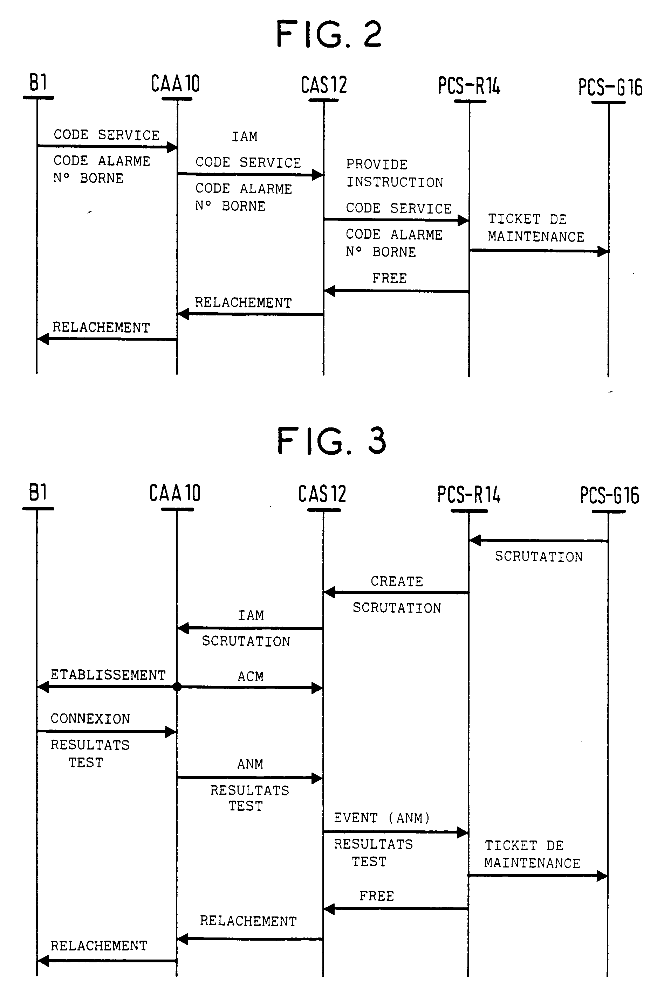

La figure 2 représente un diagramme temporel montrant les messages de commande qui sont échangés pour réaliser la transmission d'un message de maintenance émis spontanément par la station fixe B1 lorsqu'elle détecte un incident. L'écoulement du temps est représenté de haut en bas de la figure. La station fixe B1 envoie ce message de maintenance au centre à autonomie d'acheminement 10, par le canal de signalisation d'usager à usager, D. Le message contient un code de service, un numéro désignant la station fixe, et un code désignant la nature de l'alarme.

Par exemple, l'alarme peut être due à une défaillance du segment radio. Le segment radio est testé par un rebouclage des voies radio, périodiquement, à l'initiative du contrôleur situé dans la station fixe. La période est paramètrable, par téléchargement. Sa valeur peut être égale à une heure par exemple. L'alarme peut concerner aussi une défaillance du segment de réseau qui est décentralisé dans la station fixe et qui est constitué par le contrôleur et les interfaces de raccordement au réseau. Des auto-tests de ce contrôleur peuvent mettre en évidence certaines anomalies telles que : une somme de contrôle de mémoires incorrecte; un contrôleur de protocole LAP D inaccessible; etc. La station fixe peut détecter aussi des incidents relatifs aux communications téléphoniques.

Elle envoie aussi un message de maintenance quand elle détecte la disparition d'un défaut.

Quand une station fixe envoie spontanément un message de maintenance, il est routé en direction d'un point de commande de service réseau prédéterminé, 14 ou 15, qui dessert cette station, pour la maintenance. Il est déterminé par le code de service, que contient chaque message de maintenance.

Le centre à autonomie d'acheminement 10 envoie un message au centre d'accès au service 12. Ce message, noté IAM, contient le message de maintenance, dans un champ de signalisation d'usager à usager. Le centre d'accès au service 12 envoie un autre message au point de commande de service réseau 14. Ce message, noté PROVIDE INSTRUCTION, contient le message de maintenance, dans un champ de signalisation d'usager à usager.

Le point de commande de service réseau 14 acquitte ce message, en envoyant un message noté FREE, au centre d'accès au service 12, puis élabore un ticket de maintenance comprenant :
- le numéro de la station fixe, son type, ses caractéristiques;
- le numéro de l'accès du réseau, qui est relié à cette station fixe;
- le code désignant la nature de l'alarme;
- la version du logiciel de la station fixe;
- la date et l'heure de l'incident.

Le centre d'accès au service 12 envoie au centre à autonomie d'acheminement 10, un message noté RELACHEMENT, qui est retransmis ensuite à la station fixe B1, et qui commande un relâchement de la liaison. Ce message est acheminé par le canal de signalisation d'usager à usager.

Le ticket de maintenance est transmis du point de commande de service réseau 14 au point de commande de service gestion 16 où il est inscrit dans une partie de la base de données, qui est spécialisée pour les informations de maintenance des stations fixes.

La figure 3 représente un diagramme temporel, montrant les messages de commande qui sont échangés pour réaliser une scrutation de l'état de la station fixe B1, par le point de commande de service gestion 16, à l'initiative de l'exploitant de la station fixe, ou à l'initiative d'un logiciel de scrutation périodique. Le point de commande de service gestion 16 envoie un message, noté SCRUTATION, au point de commande de service réseau 14 qui le retransmet dans un message noté CREATE, dans un champ réservé à la signalisation d'usager à usager, vers le centre d'accès au service 12. Ce dernier retransmet l'ordre dans un message noté IAM, dans un champ réservé à la signalisation d'usager à usager, vers le centre à autonomie d'acheminement 10. Ce dernier établit une liaison avec la station B1 et lui retransmet l'ordre. Cet ordre est transmis par le canal D de signalisation d'usager à usager. Le centre à autonomie d'acheminement 10 émet aussi un message d'accusé de réception, noté ACM, à destination du centre d'accès au service 12.

A la réception de l'ordre d'auto-test, la station B1 réalise la procédure d'auto-test qui porte sur l'état technique général de la station et des canaux téléphoniques qui la raccordent au réseau. Cette procédure consiste en outre à rappeler les caractéristiques de la station, notamment un indicateur de la version du logiciel. La station B1 envoie les résultats du test dans un message noté CONNEXION, par le canal D de signalisation d'usager à usager, au centre à autonomie d'acheminement 10. Ce dernier retransmet les résultats du test au centre d'accès au service 12, dans un message noté ANM, dans un champ réservé à la signalisation d'usager à usager.

Le centre d'accès au service 12 retransmet les résultats du test au point de commande de service réseau 14, dans un message noté EVENT (ANM), dans un champ réservé à la signalisation d'usager à usager. Le point de commande de service réseau 14 élabore un ticket de maintenance et renvoie un message, noté FREE, au centre d'accès au service 12 pour commander le relâchement de la liaison avec la station B1. Cet ordre est retransmis du centre d'accès au service 12 vers le centre à autonomie d'acheminement 10, par un message noté RELACHEMENT. Ce message est retransmis du centre à autonomie d'acheminement 10 vers la station B1.

Le ticket de maintenance est analogue à celui élaboré dans le cas d'un appel spontané de la station B1. Il est stocké dans la base de données du point de commande de service gestion 16, dans la partie réservée aux données de maintenance des stations fixes. Les données de chaque ticket sont comparées à des données de référence, stockées dans un fichier de la base de données, afin de détecter des anomalies.

Cette centralisation de la maintenance des stations fixes permet de consulter à tout instant des données actualisées et cohérentes pour l'ensemble d'un parc de stations fixes. Cette centralisation offre aussi une grande souplesse pour l'organisation de la maintenance des stations fixes par différents exploitants. Elle permet une définition dynamique des parcs de stations fixes et des centres de maintenance correspondant à ces parcs, indépendamment de la répartition géographique réelle des stations fixes.

L'exploitation des informations de maintenance peut être réalisée à deux niveaux : dans des centres régionaux, correspondant à un parc limité de stations fixes, et dans un centre national, correspondant à l'ensemble des parcs de stations fixes du service de téléphonie sans fil. Dans l'exemple représenté sur la figure 1, une unité d'exploitation technique 9 peut constituer un centre national de maintenance permettant à un opérateur de superviser l'ensemble des parcs de stations fixes, alors que les unités d'exploitation technique 10′ peuvent constituer des centres régionaux de maintenance supervisant chacun un parc de stations fixes distinct.

Le logiciel de chaque station peut être téléchargé à partir d'une unité d'exploitation technique, 9 , 10, via le point de commande de service réseau desservant la station fixe considérée. Un téléchargement partiel est réalisé dans le cas où la maintenance de la station fixe nécessite seulement de changer des paramètres d'exploitation, tels qu'une durée de temporisation, ou bien pour mettre hors service un ou plusieurs canaux d'une station fixe défectueuse, par exemple qui lance des appels intempestifs. Un téléchargement complet est réalisé soit dans le cas d'une première mise en service de la station, soit dans le cas d'une extension de sa capacité, après adjonction de modules radio et modification des interfaces; soit dans le cas de la livraison d'une nouvelle version du logiciel. Exceptionnellement, un téléchargement peut être nécessaire aussi dans le cas d'un effacement de la mémoire du contrôleur de la station, consécutif à une panne d'alimentation en énergie.

Pour disposer d'un débit plus important que celui du canal D de signalisation d'usager à usager, le téléchargement peut être effectué en utilisant l'un des canaux téléphoniques 30 B reliant la station fixe au réseau, chacun de ces canaux ayant un débit de 64 Kbits/seconde. La réalisation d'un noyau logiciel de téléchargement, qui réside dans le contrôleur de chaque station fixe, est à la portée de l'homme de l'art.

Chaque centre régional de maintenance 10′ gère un parc de stations fixes défini selon des critères qui peuvent être géographiques, fonctionnels, ou juridiques. Chaque centre régional n'a accès qu'aux données concernant son parc de stations fixes. Un exploitant régional accède à la base de donnée des stations fixes, par l'intermédiaire du serveur de gestion des stations fixes, 19. Il peut :
- créer, supprimer, modifier, lister les stations fixes;
- lancer des ordres d'auto-test;
- positionner les différents canaux d'une station fixe, soit en service, soit hors service;
- modifier le logiciel, ou les données d'exploitation, des stations fixes par téléchargement;
- consulter les journaux des stations fixes, enregistrant l'apparition ou la disparition d'incidents.

Un exploitant régional accède aux données statistiques par l'intermédiaire du serveur de données statistiques, 19. Il peut établir des statistiques sur le trafic ou sur les incidents. Il peut consulter : les journaux d'exploitants; les journaux de communication signalant les incidents de communication; et les bilans journaliers d'exploitation.

L'exploitant national a accès aux données statistiques couvrant tous les centres régionaux de maintenance, 10′, pour établir des bilans sur l'ensemble des stations fixes, ou sur un type de stations fixes, ou par entité géographique,...

Pour certains types d'incidents, nécessitant une intervention immédiate, le point de commande de service gestion 16 déclenche l'envoi d'un message d'alarme vers un terminal ASCII du centre de maintenance concerné. Une variante peut consister à envoyer un signal d'alarme vers un simple téléphone, chez l'exploitant concerné, au moyen d'un message vocal enregistré ou synthétisé. L'exploitant établit alors une liaison au moyen d'un terminal ASCII pour consulter les données relatives à l'incident.

Selon une variante, le point de commande de service gestion 16 établit une liaison, selon le protocole X25, et envoie un message à un terminal intelligent dédié, par exemple un ordinateur personnel, installé dans les locaux de l'exploitant concerné. Le message est traité par un logiciel spécifique mis en oeuvre par le terminal intelligent. Ce logiciel permet notamment d'activer une alarme.

La maintenance de l'accès de chaque station fixe au réseau public commuté est réalisée indépendamment de la maintenance de la station. La maintenance de cet accès est réalisée par un procédé classique de tests d'un accès à un réseau numérique à intégration de services. Les résultats du test sont mémorisés dans une base de données propre à l'exploitant technique du réseau public, mais ces résultats peuvent être consultés par l'un des exploitants du service de téléphonie sans fil, si le réseau public a une structure dite de réseau de gestion de télécommunications (telecommunications management network). Une telle structure comporte des interfaces permettant à différents opérateurs d'accéder à des données de ladite base de données.

## Revendications

1. Procédé de maintenance centralisée, pour un réseau intelligent de téléphonie sans fil, la structure dudit réseau intelligent comportant :
- un réseau de distribution (1) constitué par des stations fixes (B1,...,Bp) et des téléphones numériques (T1,...,Tn), sans fil, reliés par radio aux stations fixes;
- un réseau public commuté (2), numérique, à intégration de services, chaque station fixe étant reliée à ce réseau public par un canal de signalisation d'usager à usager (D);
- des points de commande de service réseau (14, 15), reliés au réseau public commuté (2) et comportant chacun une base de données d'abonnés au service de téléphonie sans fil, et un dispositif logique de traitement d'appels;
- un point de commande de service gestion (16) comportant une base de données de référence;
caractérisé en ce qu'il consiste à :
- transmettre un message de maintenance, d'une station fixe (B1,...,Bp) à un point (14, 15) de commande de service réseau, par le canal (D) de signalisation d'usager à usager, dans les cas où la station fixe détecte un incident;
- élaborer un ticket de maintenance, dans ledit point (14, 15) de commande de service réseau;
- transmettre ledit ticket de maintenance au point (16) de commande de service gestion et le stocker dans sa base de données.

2. Procédé selon la revendication 1, caractérisé en ce qu'il consiste, en outre, à :
- transmettre un ordre d'auto-test, du point (16) de commande de service gestion à une station fixe (B1,...,Bp), via un point (14, 15) de commande de service réseau, desservant cette station, par le canal de signalisation d'usager à usager (D);
- effectuer une procédure d'auto-test dans la station recevant cet ordre;
- transmettre un message de maintenance, contenant les résultats du test, de cette station audit point (16) de commande de service réseau, par ledit canal de signalisation d'usager à usager (D);
- élaborer un ticket de maintenance, à partir du message de maintenance, dans le point (14) de commande de service réseau; et le transmettre audit point (16) de commande de service gestion;
- stocker le ticket de maintenance, dans la base de données du point (16) de commande de service gestion.

3. Procédé selon la revendication 1, applicable à un réseau dont les stations fixes (B1,...,Bp) comportent un logiciel remplaçable au moins en partie, caractérisé en ce que pour télécharger au moins une partie du logiciel d'une station fixe, à l'initiative de l'exploitant de cette station, il consiste en outre à : transmettre des informations du point (16) de commande de service gestion, via le point (14, 15) de commande de service réseau desservant ladite station, par un canal téléphonique (30B) reliant cette station au réseau public commuté (2);
et en ce que, pour permettre à un exploitant de connaître l'état du logiciel d'une station, il consiste en outre à transmettre un mot identifiant la version du logiciel d'une station, dans chaque message de maintenance envoyé par ladite station vers le point de commande de service gestion (16).

4. Procédé selon la revendication 1, caractérisé en ce qu'il consiste, en outre, à :
- transmettre du point (16) de commande de service gestion vers un terminal d'un centre régional de maintenance (10′), des informations de maintenance concernant le parc de stations fixes d'une région, ces informations étant lues dans la base de données du point (16) de commande de service gestion;
- transmettre du point (16) de commande de service gestion vers un terminal d'un centre national de maintenance (9), des informations de maintenance concernant le parc de stations fixes d'un ensemble de régions, ces informations étant lues dans la base de données du point (16) de commande de service gestion.

## Patentansprüche

1. Zentralisiertes Wartungsverfahren für ein intelligentes Mobiltelefonnetz, dessen Struktur aufweist:
- ein Verteilungsnetz (1) bestehend aus ortsfesten Relaisstationen (B1, ... Bp) und digitalen Mobiltelefonen (T1, ... Tn), die über Funk mit den Relaisstationen verbunden sind,
- ein öffentliches, digitales, drahtgebundenes Telefonnetz (2) mit Integration von Diensten, wobei jede Relaisstation einen Signalisierungskanal (D) von Benutzer zu Benutzer verwendet,
- Netz-Dienststeuerpunkte (14, 15), die an das drahtgebundene Telefonnetz (2) angeschlossen sind und je eine Datenbasis betreffend die Teilnehmer des Mobiltelefondienstes sowie eine logische Vorrichtung zur Bearbeitung von Anrufen aufweisen,
- einen Verwaltungs-Dienststeuerpunkt (16) mit einer Bezugsdatenbasis,
dadurch gekennzeichnet, daß das Verfahren darin besteht:
- eine Wartungsnachricht von einer Relaisstation (B1, ... Bp) an einen Netz-Dienststeuerpunkt (14, 15) über den Signalisationskanal (D) von Benutzer an Benutzer zu übertragen, wenn die Relaisstation eine Störung erfaßt,
- im Netz-Dienststeuerpunkt (14, 15) eine Wartungsmeldung zu erarbeiten,
- die Wartungsmeldung an den Verwaltungs-Dienststeuerpunkt (16) zu übertragen und in dessen Datenbasis zu speichern.

2. Verfahren nach Anspruch 1, dadurch gekennzeichnet, daß es weiter darin besteht,
- daß der Verwaltungs-Dienststeuerpunkt (16) an eine Relaisstation (B1, ... Bp) über einen Netz-Dienststeuerpunkt (14, 15), der diese Relaisstation betreut, und über den Signalisierungskanal (D) von Benutzer zu Benutzer einen Eigentestbefehl überträgt,
- daß in der Relaisstation, die diesen Befehl empfängt, eine Eigentestprozedur durchgeführt wird,
- daß eine Wartungsnachricht mit den Ergebnissen des Tests von dieser Relaisstation an den Netz-Dienststeuerpunkt (16) über den Signalisierungskanal (D) von Benutzer zu Benutzer übertragen wird,
- daß eine Wartungsmeldung ausgehend von der Wartungsnachricht im Netz-Dienststeuerpunkt (14) erstellt und an den Verwaltungs-Dienststeuerpunkt (16) übermittelt wird,
- daß die Wartungsmeldung in der Datenbasis des Verwaltungs-Dienststeuerpunkts (16) gespeichert wird.

3. Verfahren nach Anspruch 1, in Anwendung auf ein Netz, dessen Relaisstationen (B1, ... Bp) eine zumindest teilweise austauschbare Software besitzen, dadurch gekennzeichnet, daß das Verfahren bei einer zumindest partiellen Fernladung der Software in einer Relaisstation auf Initiative des Betreibers dieser Station darin besteht, Informationen vom Verwaltungs-Dienststeuerpunkt (16) über den Netz-Dienststeuerpunkt (14, 15), der diese Station betreut, und über einen Telefonkanal (30B) zu übertragen, der diese Station mit dem drahtgebundenen öffentlichen Telefonnetz (2) verbindet,
und daß das Verfahren, um einem Betreiber Kenntnis über den Zustand der Software einer Station zu verschaffen, außerdem darin besteht, ein Wort zu übertragen, das die Version der Software einer Station in jeder Wartungsnachricht enthält, die von der Station zum Verwaltungs-Dienststeuerpunkt (16) gesendet wird.

4. Verfahren nach Anspruch 1, dadurch gekennzeichnet, daß es außerdem darin besteht,
- vom Verwaltungs-Dienststeuerpunkt (16) an ein Endgerät eines regionalen Wartungszentrums (10') Wartungsinformationen betreffend die Gruppe von Relaisstationen einer Region zu übertragen, wobei diese Informationen aus der Datenbasis des Verwaltungs-Dienststeuerpunkts (16) ausgelesen werden,
- vom Verwaltungs-Dienststeuerpunkt (16) an ein Endgerät eines nationalen Wartungszentrums (9) Wartungsinformationen betreffend die Relaisstationen einer Gruppe von Regionen zu übertragen, wobei diese Informationen aus der Datenbasis des Verwaltungs-Dienststeuerpunkts (16) ausgelesen werden.

## Claims

1. Centralised maintenance method for an intelligent wireless telephone network comprising:
- a distribution network (1) comprising fixed stations (B1, ..., Bp) and wireless digital telephones (T1, ..., Tn) linked by radio to the fixed stations;
- an integrated services digital public switched telephone network (2) to which each fixed station is connected by a user to user signalling channel (D);
- service control points (14, 15) connected to said public switched telephone network (2) and each comprising a wireless telephone service subscriber database and a call processing device; and
- a service management system (16) comprising a reference database;
characterised in that it consists in:
- transmitting a maintenance message from a fixed station (B1, ..., Bp) to a service control point (14, 15) over the user to user signalling channel (D) in response to the fixed station detecting a fault;
- generating a maintenance ticket at said service control point (14, 15); and
- transmitting said maintenance ticket to said service management system (16) and storing it in said database.

2. Method according to claim 1, characterised in that it further consists in:
- transmitting a self-test instruction from said service management system (16) to a fixed station (B1, ..., Bp) via a service control point (14, 15) serving said station over the user to user signalling channel (D);
- executing a self-test procedure in the fixed station receiving said instruction;
- transmitting a maintenance message containing the test results from said fixed station to said service management system (16) over said user to user signalling channel (D);
- generating a maintenance ticket from said maintenance message in said service control point (14) and transmitting it to said service management system (16); and
- storing said maintenance ticket in said database of said service management system (16).

3. Method according to claim 1, applicable to a network in which said fixed stations (B1, ..., Bp) comprise software that is at least in part replaceable, characterised in that, to download at least part of the software of a fixed station at the initiative of theoperator of said station, it further consists in transmitting information from said service management system (16) via the service control point (14, 15) serving said station over a telephone channel (30B) connecting said station to said public switched telephone network (2),
and in that, to enable an operator to determine the status of the software of a fixed station, it further consists in transmitting a word identifying the software version of a fixed station in each maintenance message sent by said fixed station to said service management system (16).

4. Method according to claim 1, characterised in that it further consists in:
- transmitting from said service management system (16) to a terminal of a regional maintenance centre (10) maintenance information concerning the set of fixed stations of a region, said information being read from the database of the service management system (16); and
- transmitting from the service management system (16) to a terminal of a national maintenance centre (9) maintenance information concerning the set of fixed stations of a set of regions, said information being read from said database of said service management system (16).
